# Europäisches Patentamt
# European Patent Office
# Office européen des brevets

(11) Numéro de publication: **0 169 156**
**B1**

(12) **FASCICULE DE BREVET EUROPÉEN**

(45) Date de publication du fascicule du brevet:
23.08.89

(21) Numéro de dépôt: **85440008.2**

(22) Date de dépôt: **13.02.85**

(51) Int. Cl.⁴: **B 66 F 9/04,** B 65 G 47/10

(54) Chariot automoteur de manutention robotisé.

(30) Priorité: **14.06.84 FR 8409790**

(43) Date de publication de la demande:
**22.01.86 Bulletin 86/4**

(45) Mention de la délivrance du brevet:
**23.08.89 Bulletin 89/34**

(84) Etats contractants désignés:
**AT BE CH DE GB IT LI LU NL SE**

(56) Documents cité:
**CH-A-513 056**
**DE-A-3 224 974**
**FR-A-2 042 402**
**FR-A-2 185 586**
**FR-A-2 286 767**
**GB-A-1 049 811**
**GB-A-2 060 265**
**LU-A-57 479**

(73) Titulaire: **REDOUTE CATALOGUE Société Anonyme:, 57 rue Blanchemaille, F-59100 Roubaix (Nord) (FR)**

(72) Inventeur: **Bonneton, Marc, 325 boulevard Gambetta, F-59200 Tourcoing (Nord) (FR)**
Inventeur: **Janvier, Dominique, 31 Avenue de la Roseraie, F-59000 Lille (Nord) (FR)**

(74) Mandataire: **Lepage, Jean- Pierre, Cabinet Lepage & Aubertin Innovations et Prestations 23/25, rue Nicolas Leblanc B.P. 1069, F-59011 Lille Cédex 1 (Nord) (FR)**

LIBER, STOCKHOLM 1989

EP 0 169 156 B1

## Description

L'invention est relative à un chariot automoteur de manutention robotisé. Elle trouvera notamment son application pour les magasins de stockage d'objets divers, rencontrés en particulier dans les sociétés de vente par correspondance.

Actuellement, pour assurer le stockage de nombreux articles dans des magasins, il est connu d'utiliser des casiers espacés par des allées, chaque casier renfermant un bac où sont disposés les objets stockés.

Le prélèvement des pièces peut être opéré à l'aide de chariots à fourches pilotés par un opérateur qui se déplacent dans les allées et qui manipulent les bacs remplis d'articles. Un service de regroupement des commandes doit ensuite prélever des pièces nécessaires dans les bacs, diriger les pièces vers un service d'expédition où les commandes de chaque client sont regroupées et expédiées. Les bacs prélevés doivent être ensuite rangés à nouveau dans les casiers correspondants. Le procédé précédemment décrit exige de nombreuses manutentions, aussi se trouve-t-il très rapidement limité et il ne peut être utilisé lorsque le nombre de références à gérer est important.

Aussi, certaines industries utilisent des transtockeurs qui sont des chariots spécialisés mais qui sont toutefois destinés à demeurer dans une allée bordée par las casiers. Le chariot-transtockeur peut être automatique et selon un programme, il est susceptible d'aller rechercher le bac contenant les pièces détachées, placé dans un endroit précis des casiers référencés.

Les objets ainsi prélevés sont déposés par le transtockeur dans une allée centrale transversale aux allées à transtockeur et, cette allée centrale est munie généralement d'un convoyeur à bandes, ce qui permet de diriger les objets vers un centre de regroupement.

Il s'agit là du dispositif le plus perfectionné existant actuellement mais qui toutefois ne donne pas entière satisfaction pour différents motifs. En particulier, on pourra citer le fait que le transtockeur ne manipule qu'une référence à la fois. Il doit donc effectuer un aller-retour chaque fois que l'on fait appel à une référence différente, ce qui rend son temps de cycle très long.

En outre, les transtockeurs ne fonctionnent pas avec l'emballage définitif des articles prélevés, aussi, est-il nécessaire de prévoir une opération de tri en sortie de magasin pour regrouper les objets d'une même commande et de diriger ensuite les objets regroupés vers un centre d'emballage et d'expédition.

Un autre inconvénient important du système précédemment décrit réside dans le fait que l'ensemble du fonctionnement du magasin peut être paralysé si l'un des transtockeurs venait à tomber en panne.

En outre, il est connu des documents DE-A-3 224 974 et FR-A-2 286 767 des systèmes automatiques pour le prélèvement, la distribution, le déchargement d'objets volumineux sur des étagères de rayonnage de magasin.

Ces documents décrivent un engin de manutention comprenant:
- un châssis motorisé monte sur roues susceptible de se déplacer dans les allées d'un magasin comprenant une multitude de casiers modulaires,
- des moyens de prélèvement portés par le châssis aptes à déplacer un bac, une palette ou une charge volumineuse complète des casiers modulaires du magasin,
- et un magasin embarqué dans lequel sont susceptibles d'être placés les dits bacs complets, charges volumineuses complètes ou similaires ainsi manipulés.

Toutefois, ces dispositifs permettent de déplacer un bac complet, ou une palette, ou une charge volumineuse complète d'un magasin principal vers un magasin secondaire. Mais, ils n'autorisent en aucun cas de prélever un des articles contenus dans les dits bacs, palettes ou similaires, pour réaliser la préparation de commandes pré-établies par regroupement d'articles à expédier, ceux-ci étant préalablement stockés dans un magasin général, regroupés par référence dans des bacs, trémies, distributeurs, ou similaires.

On peut également souligner le fait qu'un magasin automatisé à l'aide de transtockeurs est conçu pour travailler à une cadence prédéterminée qui ne peut être modulée en fonction du nombre de commandes à traiter. Aussi, pour certaines activités où la rotation de stocks soit plus faible, soit plus forte que cette cadence, la mise en place d'un système automatisé à transtockeurs ne peut être rentabilisée.

Le but principal de la présente invention est de présenter un chariot automoteur de manutention robotisé destiné à s'intégrer dans un système modulaire d'automatisation intégrale d'un magasin de stockage d'articles du commerce ou de pièces détachées.

Le chariot automoteur de la présente invention permettra d'assurer les trois fonctions essentielles rencontrées dans la gestion d'un stock à savoir:
- réapprovisionnement ou prélèvement par bacs complets de pièces dans les casiers du stock,
- prélèvement et tri de commandes à plusieurs articles,
- prélèvement, emballage, adressage de commande d'un seul article.

Le chariot automoteur de manutention robotisé de la présente invention est en dialogue avec un ordinateur central qui lui impose ces différentes tâches.

Un autre but de la présente invention est de présenter un chariot automoteur susceptible de travailler sur plusieurs commandes ce qui minimise le nombre de manutentions.

Un autre but de la présente invention est de présenter un chariot automoteur autonome susceptible de travailler en coopération avec plusieurs de ses semblables dans un magasin et ainsi de s'adapter aux besoins du moment.

Ainsi, le chariot automoteur de la présente invention pourra s'adapter aux petites et grosses unités en fonction des besoins.

Par ailleurs, le chariot automoteur de la présente invention pourra s'adapter à la préhension d'articles de nature très différentes, grâce à l'utilisation d'outillages spécialisés qui lui permettront de s'adapter notamment aux sociétés de ventes par correspondance qui ont à traiter des articles très divers.

D'autres buts et avantages de la présente invention apparaîtront au cours de la description qui va suivre qui n'est cependant donnée qu'à titre indicatif et qui n'a pas pour but de la limiter.

Selon la présente invention, le chariot automoteur de manutention robotisé pour magasin de stockage d'articles, destiné à assurer le réapprovisionnement du stock et la prise d'articles pour réunir une commande, lesdits articles étant placés dans des bacs, trémies, distributeurs ou similaires, ledit chariot comprenant:

- un châssis motorisé monté sur roues susceptible de se déplacer dans les allées d'un magasin comprenant une multitude de casiers modulaires; des bacs, trémies ou distributeurs de magasin de stockage étant rangés dans lesdits casiers modulaires dans lesquels sont regroupés par référence les dits articles,
- un magasin embarqué,
- des moyens de prélèvement portés par le châssis, susceptibles soit de déplacer un bac de magasin de stockage, ou similaire, entre les casiers du magasin de stockage et le dit chariot automoteur, et/ou inversement, soit de déplacer et de manipuler un des bacs, trémies ou distributeurs de magasin, embarqués sur le dit chariot automoteur,

caractérisé par le fait qu'il comporte:
- des moyens de préhension susceptibles de prendre un des articles contenus dans un bac, trémie, distributeur de magasin de stockage, manipulé par les dits moyens de prélèvement,
- le dit magasin embarqué présentant différents compartiments susceptibles de recevoir chacun un bac, trémie ou distributeur de magasin embarqué, lesquels seront aptes à recevoir les dits articles manipulés par les moyens de préhension.

L'invention sera mieux comprise à la lecture de la description suivante accompagnée de dessins en annexe parmi lesquels.

La figure 1 représente le chariot automoteur de la présente invention en cours de fonctionnement dans une allée d'un magasin de stockage.

La figure 2 schématise le chariot automoteur dans sa version appropriée au réapprovisionnement du stock.

La figure 3 schématise le chariot automoteur de la présente invention avec un équipement de prélèvement multi-articles.

La figure 4 schématise le chariot automoteur de la présente invention dans sa version adaptée au prélèvement et emballage des mono-articles.

La figure 5 représente en vue de face le chariot automoteur de manutention robotisé de la présente invention équipé d'un ensemble manipulateur.

La figure 6 représente en vue de dessus le chariot automoteur de la présente invention équipé de l'ensemble manipulateur.

Les figures 7a et 7b représentent respectivement en vue de face et de dessus le fonctionnement du dispositif à fourches d'extraction.

Les figures 8a et 8b illustrent respectivement en vue de côté et de face un bac de rangement d'un casier modulaire du magasin de stockage selon un mode préférentiel de réalisation de celui-ci.

La figure 9 illustre en vue de face la tête de prélèvement de l'ensemble manipulateur.

La figure 10 illustre en vue de côté la tête de prélèvement de l'ensemble manipulateur.

Les figures 11a et 11b schématisent les différentes phases du fonctionnement de l'outil de préhension à molettes.

La figure 12 représente en vue de-dessus le chariot automoteur de la présente invention équipé d'un dispositif d'emballage des mono-articles.

La figure 13 représente en vue de face le chariot automoteur de manutention robotisé de la présente invention équipé d'un dispositif d'emballage des mono-articles.

La figure 14 représente de façon schématique le parcours d'un chariot automoteur dans un magasin de stockage automatisé.

La présente invention vise un chariot automoteur de manutention robotisé pour magasins de stockage d'articles regroupés par référence dans des bacs, trémies ou distributeurs rangés dans des casiers modulaires.

L'invention ayant été développée pour l'industrie de la vente par correspondance, l'exemple de réalisation décrit par la suite concerne plus spécialement le réapprovisionnement général des stocks et la préparation de commandes par regroupement des articles à expédier, il peut s'agir de commandes qui ne concernent qu'un seul article ou plusieurs articles. Néanmoins, l'invention trouvera un champ d'application beaucoup plus large dans l'industrie où le chariot automoteur de la présente invention pourra être utilisé dans des magasins de pièces détachées ou autres.

Comme il ressortira de la description suivante, la nature des pièces stockées importe peu pourvu qu'elles puissent être conditionnées dans un système de rangement modulaire qui peut par exemple se présenter sous la forme de bacs, trémies ou distributeurs et autres.

Le chariot automoteur de manutention robotisé de la présente invention est destiné à être intégré dans un système de gestion du fonctionnement du magasin entièrement automatisé piloté par un ordinateur central.

Par un dialogue qui peut être permanent ou intermittent avec l'ordinateur central, le chariot automoteur de la présente invention se verra définies les tâches qui lui incombent.

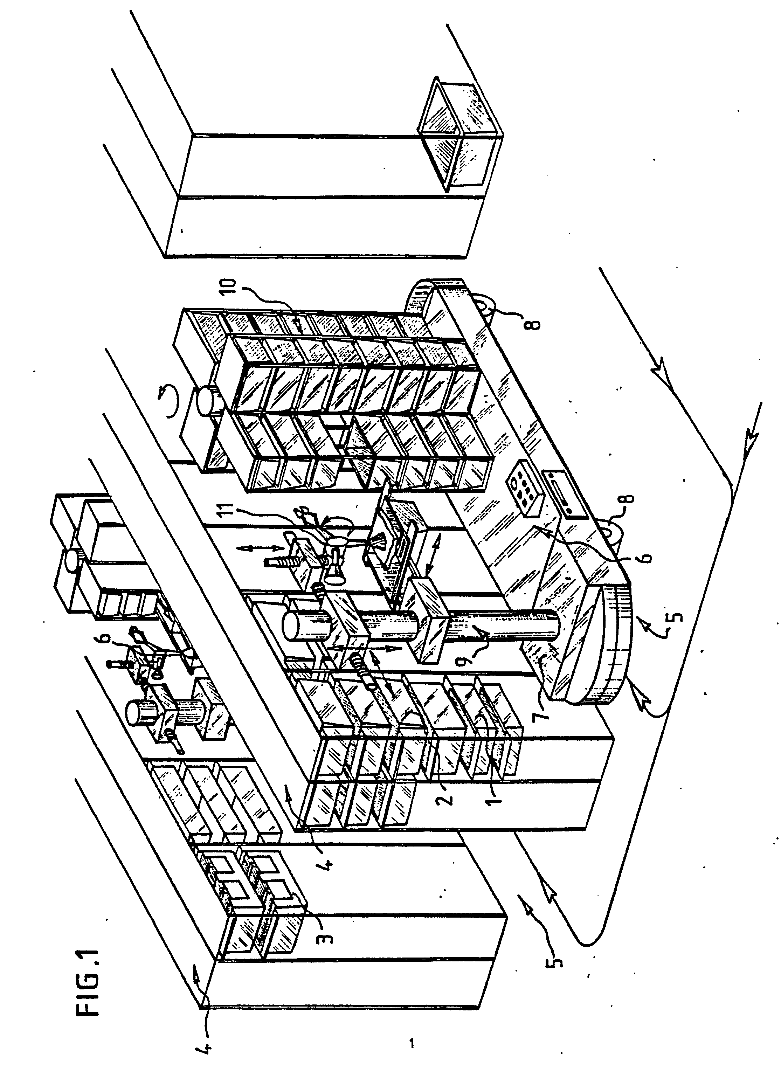

La figure 1 schématise un magasin de stockage d'articles regroupés par référence dans des bacs 1, trémies 2 ou distributeurs 3.

Il est spécifié que les articles sont regroupés par référence étant donné qu'il s'agit d'un système informatisé et par conséquent c'est par codage que les articles sont reconnus au niveau de l'ordinateur.

Le regroupement des articles dans des bacs 1, trémies 2 ou distributeurs 3 dépend de la nature du produit, généralement, le bac est adapté aux produits conditionnés dans des boîtes, la trémie est adaptée aux articles souples disposés en vrac et le distributeur concerne les produits généralement de petites dimensions dont la préhension est délicate. D'autres modes de rangement pourraient être envisagés sans pour autant sortir du cadre de la présente invention.

Les bacs 1, trémies 2 ou distributeurs 3 sont rangés dans des casiers 4 modulaires d'où ils peuvent être extraits.

Les casiers 4 modulaires bordent des allées 5 à l'intérieur desquelles peuvent librement circuler les chariots automoteurs 6 de manutention robotisés.

Le chariot automoteur de la présente invention est autonome et selon l'importance des besoins, le magasin de stockage pourra en comprendre un nombre variable.

Le chariot automoteur de la présente invention qui comprend un châssis 7 monté sur roues 8 est en outre équipé de moyens de prélèvement 9 d'un bac, trémie ou distributeur des casiers 4 modulaires du magasin.

Ces moyens de prélèvement sont bidirectionnels et permettent par conséquent, soit d'extraire d'un casier le bac, trémie ou distributeur choisi, soit de l'y replacer.

En outre, le chariot automoteur de la présente invention est caractérisé par le fait qu'il comprend un magasin embarqué 10 à plusieurs compartiments de rangement des articles.

L'emploi d'un magasin embarqué présente de nombreux avantages en particulier il permet de minimiser les temps de manutention en réduisant les trajets. Par exemple, le chariot automoteur de la présente invention peut suivre plusieurs commandes simultanément ou assurer durant son trajet le réapprovisionnement de différents articles du stock.

Le rôle du chariot automoteur de manutention robotisé de la présente invention est double, d'une part, il doit permettre d'assurer le réapprovisionnement du stock du magasin automatisé et d'autre part, il permet d'assurer le prélèvement d'articles du magasin pour satisfaire une commande.

Selon la fonction du chariot automoteur envisagée, son équipement pourra varier, toutefois, selon un mode préférentiel de réalisation du chariot de la présente invention, les équipements pourront être interchangés rapidement afin qu'ils puissent s'adapter aux besoins.

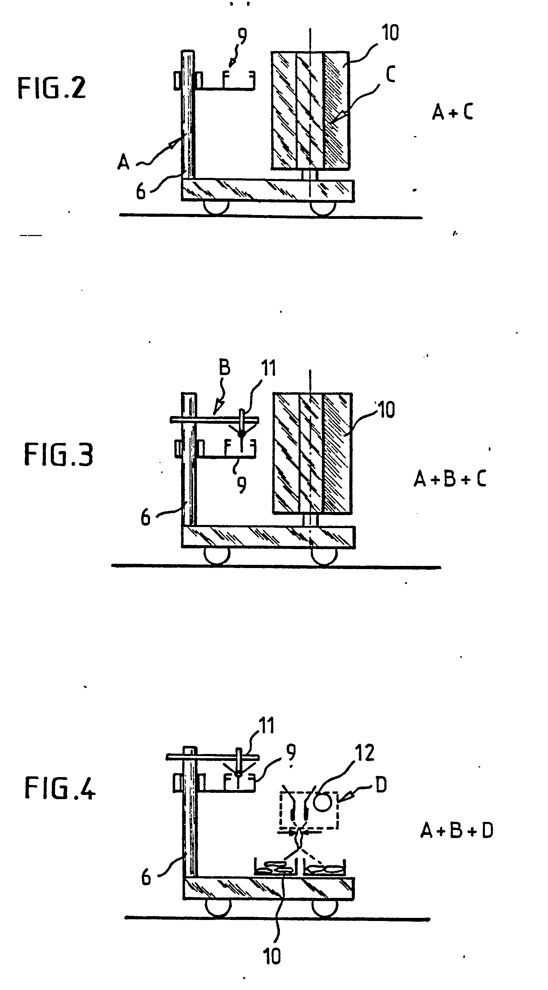

La figure 2 représente un chariot automoteur 6 de manutention robotisé présentant un équipement adapté au réapprovisionnement des stocks du magasin. Pour cela, le chariot 6 comporte des moyens de prélèvement 9 qui lui permettent d'extraire ou de replacer un bac, trémie ou distributeur dans un casier modulaire du magasin.

Par ailleurs, le chariot automoteur 6 comprend également un magasin embarqué 10 dont les différents compartiments sont susceptibles de recevoir un bac, trémie ou distributeur analogue à ceux utilisés pour le rangement dans les casiers du magasin.

Les moyens de prélèvement 9 pourront également exercer leurs fonctions vis-à-vis du magasin embarqué 10 c'est-à-dire qu'ils peuvent extraire un bac, trémie ou distributeur du magasin 10 ou l'y replacer.

Le fonctionnement du chariot automoteur 9 dans sa version réapprovisionnement du stock est le suivant. Le chariot automoteur circule dans les allées du magasin et vient s'immobiliser en face du casier dont le bac est vide. Les moyens de prélèvement 9 permettent d'extraire le bac vide et rangent ledit bac vide dans le magasin 10 embarqué. Puis, les mêmes moyens 9 extraient du magasin embarqué un bac rempli d'articles et replacent ce bac plein dans le casier à la place du bac vide. En général, le magasin embarqué comprend une pluralité de compartiments et le réapprovisionnement du magasin peut ainsi être effectué rapidement.

La figure 3 schématise un chariot automoteur 6 de manutention robotisé destiné à assurer le prélèvement multi-articles. Pour cela, le chariot 6 comprend des moyens de prélèvement 9 qui permettent d'extraire ou de replacer un bac, trémie ou distributeur des casiers modulaires du magasin. En outre, les moyens de prélèvement sont dotés d'un ensemble manipulateur 11 susceptible de prélever un article d'un bac, trémie ou distributeur placé dans les moyens 9.

Le chariot automoteur 6 comprend également un magasin embarqué 10 où sont placés des bacs de regroupement des commandes. Ces bacs de regroupement des commandes sont susceptibles d'être extraits et replacés dans le magasin 10 par des moyens de prélèvement 9. Le fonctionnement du chariot automoteur est le suivant.

Le chariot se déplace dans les allées du magasin et vient s'immobiliser en face du casier contenant le bac où est rangé un des articles nécessaire à la constitution d'une commande. Les moyens de prélèvement 9 extraient du casier le bac en question, et ensemble manipulateur 11 vient appréhender l'article en commande du bac. La prise étant réalisée, le bac est à nouveau replacé dans le casier et les moyens de prélèvement 9 viennent extraire du magasin de rangement 10 le bac de regroupement de la commande correspondant à l'article prélevé. Une fois l'opération réalisée, l'ensemble manipulateur 11 place dans le bac de regroupement des commandes l'article commandé et les moyens de prélèvement replacent dans le magasin embarqué 10 le bac de regroupement des articles commandés.

Il faut noter qu'aussitôt le bac replacé dans le casier, le chariot automoteur peut à nouveau se déplacer dans le magasin pour assurer un nouveau prélèvement, alors que la mise en place de l'article commandé dans le bac de regroupement des commandes est assurée durant que le chariot est en mouvement. Ainsi, une partie des opérations est effectuée en temps masqué, ce qui optimise la vitesse de travail.

Puisque le magasin embarqué 10 peut contenir plusieurs bacs de regroupement des commandes, durant son parcours dans le magasin, le chariot automoteur peut assurer le suivi simultané de plusieurs commandes.

La figure 4 représente le chariot automoteur 6 de la présente invention adapté au cas du prélèvement des mono-articles. Dans ce cas, le chariot comprend des moyens de prélèvement 9 et un ensemble manipulateur 11 analogues au cas précédent, ce qui permet d'assurer la prise d'articles unitaires dans les bacs de rangement des casiers et puisqu'il s'agit de traiter une commande ne comportant qu'un poste d'une pièce, le chariot 6 est équipé d'une ensacheuse 12 dans laquelle la pièce prélevée est dirigée. Par conséquent, le conteneur ou wagonnet 44, situé en aval de l'ensacheuse 12 reçoit des articles emballés prêts à être expédiés.

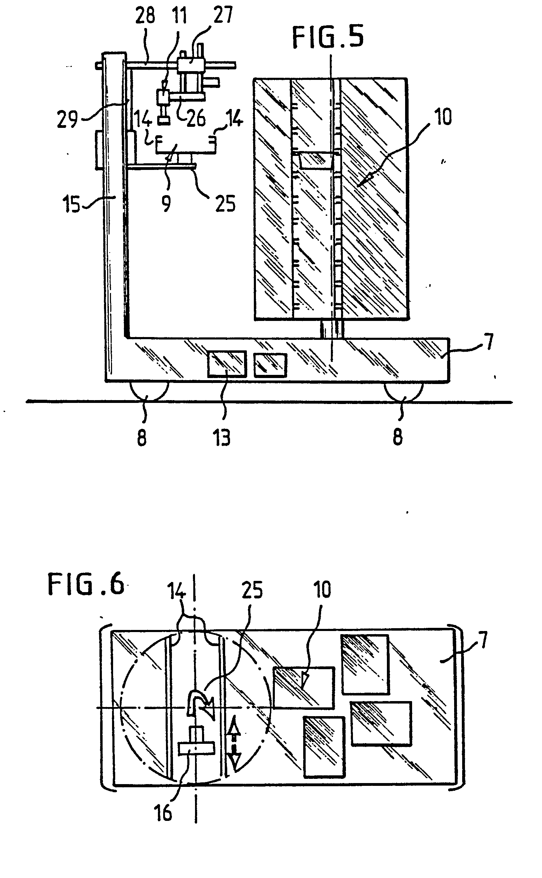

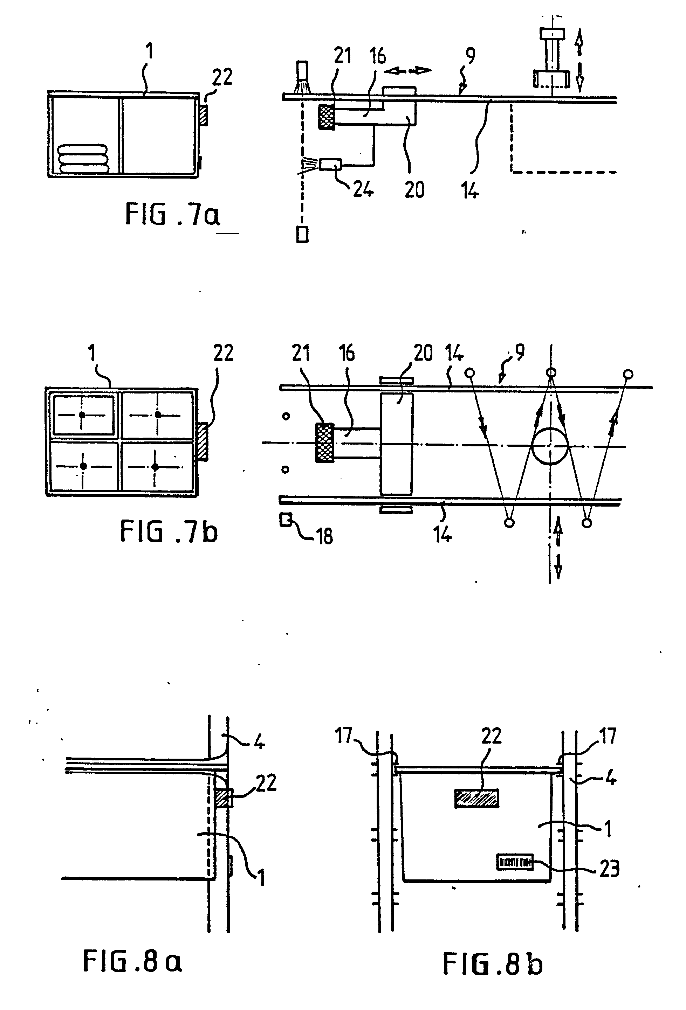

Les figures 5 et 6 représentent respectivement en vues de face et de-dessus un chariot automoteur de manutention robotisé selon la présente invention plus particulièrement adapté au réapprovisionnement des stocks et au prélèvement multi-articles.

Le chariot automoteur comprend un châssis 7 motorisé monté sur roues 8. Selon la présente invention, l'alimentation du moteur d'entraînement du chariot est réalisée au moyen de batteries 13 dont la recharge est assurée périodiquement par biberonnage.

Les moyens de prélèvement 9 sont constitués d'un dispositif à fourches d'extraction 14 à déplacement vertical sur une tourelle 15. De la sorte, le positionnement des fourches d'extraction 14 vis-à-vis des casiers sera assuré dans le sens horizontal par la position occupée par le châssis 7 du chariot 6, et dans le sens vertical par le positionnement des fourches 14 sur la tourelle 15 le long de laquelle elles peuvent coulisser.

Ainsi, les fourches d'extraction 14 viennent se mettre en regard du casier contenant le bac, trémie ou distributeur à extraire et un extracteur 16 est susceptible de venir accrocher le bac, trémie ou distributeur à prélever et le faire glisser sur les fourches 14. Par un mouvement inverse, l'extracteur 16 peut repousser le bac dans le casier.

Les figures 8a et 8b illustrent respectivement en vues de côté et de face un bac 1 de rangement des articles placés dans un casier 4.

Selon un mode préférentiel de réalisation des casiers 4, ceux-ci comprennent des glissières 17 dans lesquelles sont placés les bacs, trémies ou distributeurs.

Les fourches d'extraction 14 se présentent sous une forme analogue aux glissières 17 et par conséquent le glissement d'un bac 1 depuis le casier 4 dans les fourches 14 du chariot peut être réalisé simplement.

Les figures 7a et 7b illustrent respectivement en vues de face et de-dessus les moyens de prélèvement 9 du chariot de la présente invention. Les moyens 9 comprennent des fourches d'extraction 14 susceptibles de venir s'aligner avec les glissières 17 du casier 4 dans lequel est rangé le bac 1 contenant les articles à prélever. L'alignement des fourches d'extraction 14 avec les glissières 17 du casier 4 sera ajusté en dernier ressort à l'aide d'un capteur analogique de position 18. Les montants du casier 4 seront de préférence dotés de repères codés 19 ainsi, le capteur analogique de position 18 pourra affiner le positionnement des fourches d'extraction 14 en modifiant d'une part la hauteur des moyens 9 sur la tourelle 15 et par ailleurs le stationnement du chariot 6.

L'extracteur 16 se compose d'un chariot 20 motorisé pouvant se déplacer axialement le long des fourches d'extraction 14. En outre, l'extracteur 16 comporte des moyens d'accrochage amovibles 21 aux bacs, trémies ou distributeurs de rangement des articles.

Dans le cas envisagé ici, des moyens d'accrochage 21 sont formés par un électro-aimant susceptible d'attirer une pièce métallique 22 fixée sur la face avant des bacs 1, trémie, ou distributeur.

Ainsi, l'extracteur 16 est initialement manoeuvré le long des fourches 14 afin que l'électro-aimant 21 puisse venir se positionner à proximité de la pièce métallique 22. L'électro-aimant 21 est alors alimenté afin d'assurer sa cohésion avec la pièce 22 solidaire du bac 1. Alors, l'extracteur 16 est manoeuvré en sens inverse le long des fourches 14 et entraîne dans son mouvement le bac 1 qui vient s'emboîter ainsi dans les glissières des fourches d'extraction 14.

Afin de s'assurer que l'article prélevé correspond exactement à la référence recherchée, selon la présente invention, on dispose sur la face avant des bacs de rangement des articles, une étiquette 23 codée où figure la référence du produit contenu dans le bac. Un lecteur par exemple du type "laser" 24 placé sur le chariot vient lire le code inscrit sur l'étiquette 23 préalablement au prélèvement pour garantir l'exactitude de l'opération.

Par ailleurs, on pourra également avantageusement équiper les moyens de prélèvement d'un dispositif d'aide et de contrôle du prélèvement. Par exemple, il peut être utilisé un dispositif optique qui permet de localiser la position des articles dans le bac afin d'aide l'ensemble manipulateur dont la description sera donnée ultérieurement pour le prélèvement des dits articles.

Les fourches d'extraction seront de préférence montées sur un plateau tournant 25. Cette possibilité de rotation des fourches d'extraction 14 leur permettra de s'aligner de part et d'autre du chariot 6 et également de se diriger vers le magasin embarqué 10.

De préférence, le magasin embarqué 10 se présente sous la forme d'un meuble tournant formé de plusieurs piles de casiers modulaires superposés et répartis sur le pourtour du meuble 10.

A titre d'exemple, à la figure 6, il a été représenté quatre piles susceptibles de recevoir des bacs de rangement ou de regroupement des commandes.

De par sa rotation, le meuble tournant peut diriger l'une des piles vers les moyens d'extraction mobiles verticalement et qui permettront de prélever le bac disposé dans le meuble tournant pour servir à réapprovisionner le stock ou pour y déposer un article prélevé par ensemble manipulateur, ledit bac étant ensuite replacé dans le meuble tournant qui ainsi sert au regroupement des commandes.

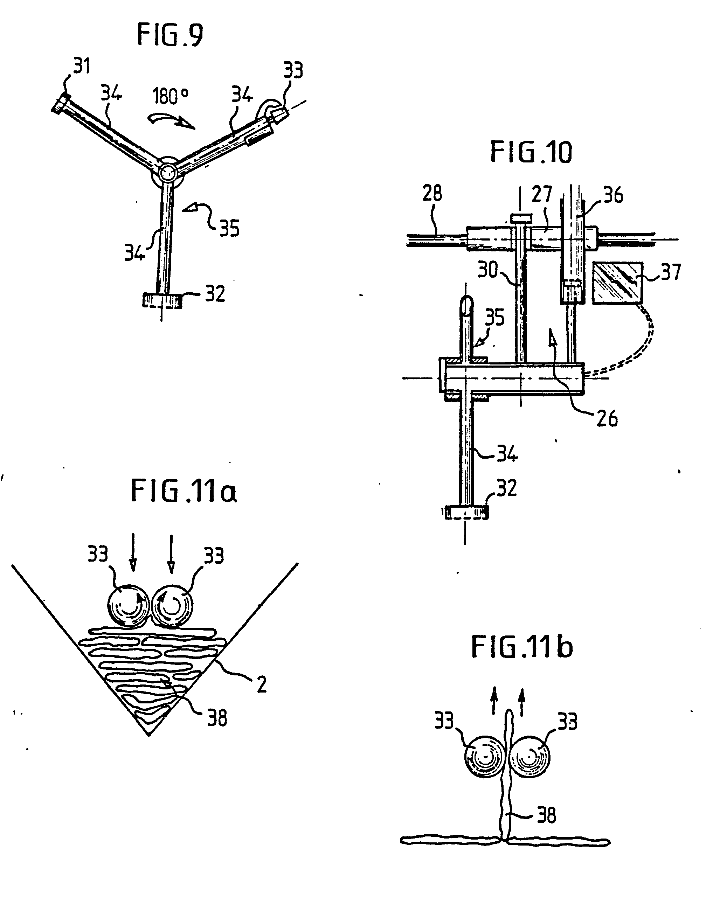

L'ensemble manipulateur 11 est formé d'une tête de prélèvement 26 telle qu'illustrée à la figure 10 montée sur un chariot 27 mobile le long d'une potence 28 supportée par la tourelle 15. La potence 28 peut coulisser le long de la tourelle 15 et présente de préférence une liaison 29 telle qu'illustrée à la figure 5 avec le support à plateau tournant des fourches d'extraction pour disposer d'une position relative constante avec les moyens de prélèvement.

Par contre, la tête de prélèvement 26 comprend un bras 30 de support mobile verticalement afin de permettre à la tête de plonger dans les bacs disposés dans les fourches d'extraction pour y prélever un article.

Etant donné la nature très diverse que peuvent revêtir les articles stockés, la tête de prélèvement peut comprendre différents outils de préhension qui seront actionnés selon les besoins. Dans l'exemple illustré aux figures 9 et 10, il a été considéré le cas de trois outils différents de préhension. Ces outils 31, 32 et 33 sont disposés à l'extrémité des branches 34 d'une étoile 35.

L'étoile 35 est mobile en rotation, ainsi, il est possible de placer l'un des outils 31, 32 ou 33 à la verticale afin que ce dernier soit opérationnel. L'étoile 35 fixée au bout du bras 30 peut être manoeuvrée verticalement à l'aide d'un vérin 36 dont la course permet à l'étoile 35 de plonger dans le bac de stockage placé dans les fourches d'extraction.

Dans l'exemple illustré à la figure 9, les outils de préhension se composent d'une petite ventouse 31, d'une grande ventouse 32 et de molettes 33 dont le fonctionnement sera décrit par la suite. Le principe de fonctionnement des ventouses 31 et 32 est bien connu, il s'agit de créer une dépression interne qui ainsi fait que l'article reste plaqué contre la ventouse. Eventuellement, la ventouse 32 par exemple pourra être équipée d'un dispositif de rotation 0,90° pour exécuter par exemple un rangement de l'objet prélevé.

La dépression créée dans la ventouse opérationnelle est réalisée par une turbine 37 illustrée à la figure 10 reliée à l'étoile 35 qui présente à cet effet des branches creuses et un distributeur associé pour mettre en communication la branche creuse 34 de la ventouse opérationnel le avec la turbine.

Les molettes 33 ont été spécialement étudiées pour s'appliquer aux objets souples disposés en vrac dans les trémies de stockage 2.

Il est en effet délicat de s'assurer du prélèvement d'un seul article souple disposé en vrac dans une trémie, tel que par exemple des articles textiles.

Le principe de fonctionnement des molettes 33 est illustré aux figures 11a et 11b.

De préférence, les molettes présentent une forme conique toutefois une forme cylindrique pourrait également être envisagée. Les molettes 33 sont motorisées et en appui l'une contre l'autre par leur génératrice.

Les molettes 33 sont plongées dans la trémie 2 telles qu'illustrées à la figure 11a jusqu'à venir en appui avec les articles 38 disposés en vrac dans la trémie 2.

Alors, les molettes 33 sont mises en rotation de sorte à venir happer l'article souple se trouvant en contact avec celles-ci.

Un dispositif capteur permet de détecter la présence de l'article entre les molettes, par exemple, on peut concevoir un dispositif permettant de détecter l'écartement existant entre les molettes 33 résultant de l'introduction d'un article entre celles-ci.

Aussitôt l'article happé, la rotation des molettes 33 est arrêtée et l'outil de préhension peut être relevé tel qu'illustré à la figure 11b l'article 38 prélevé étant passé entre les molettes 33.

Pour dégager l'article 38 prélevé, il suffit d'inverser le sens de rotation des molettes 33 pour dégager ledit article. De préférence, il est utilisé une trémie 2 de stockage des articles en vrac afin que les articles se regroupent dans le fond de la trémie quelle que soit leur quantité. Le prélèvement est ainsi facilement réalisé quel que soit le nombre d'articles restant dans la trémie.

Le chariot mobile précédemment décrit peut s'appliquer par conséquent au prélèvement multi-articles dans les stocks pour regrouper lesdits articles prélevés dans les bacs de prélèvement stockés dans le magasin embarqué, lesdits bacs de prélèvement étant ensuite dirigés vers un magasin d'expédition où ils sont emballés et expédiés.

Le chariot automoteur peut également être utilisé pour assurer le réapprovisionnement des stocks, dans ce cas, l'ensemble manipulateur 11 n'est pas utilisé.

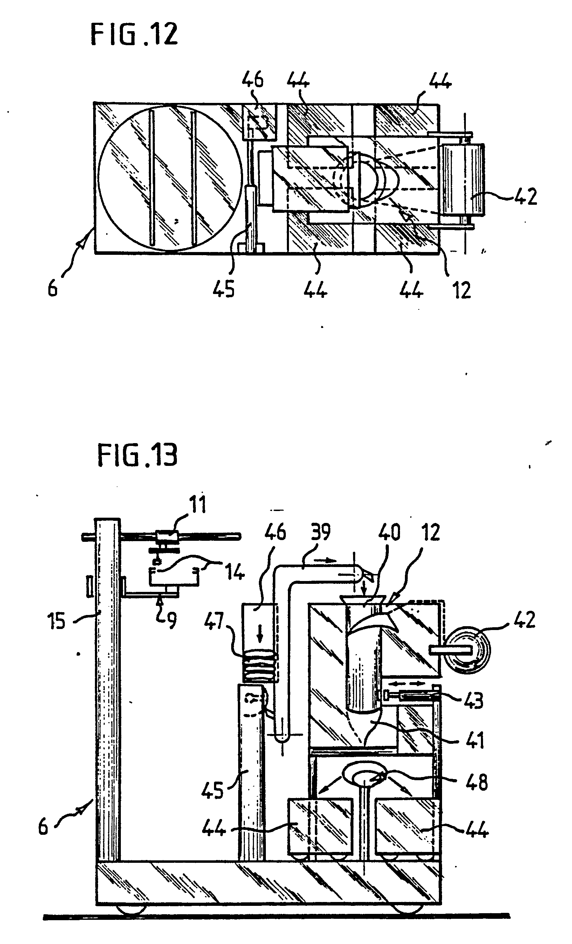

Dans le cas où les commandes portent sur un seul article, on pourra avantageusement utiliser le chariot automoteur illustré aux figures 12 et 13. Dans ce cas, le chariot automoteur 6 comprend des moyens de prélèvement 9 similaires à ceux décrits pour le chariot automoteur précédent c'est-à-dire comprenant des fourches d'extraction 14 montées sur une tourelle 15 et un ensemble manipulateur 11 apte à prélever un article contenu dans un bac mis en place dans les fourches d'extraction 14.

Toutefois, le magasin embarqué 10 comprend une ensacheuse 12. Dans l'exemple illustré aux figures 12 et 13, le chariot automoteur comprend un convoyeur 39 sur lequel est déposée la marchandise à emballer. Ce convoyeur 39 achemine l'article jusqu'à une goulotte 40 dans laquelle l'article est introduit. Le fond de la goulotte est formé par un sachet 41 préformé à partir d'un film plastifié 42 disposé initialement en rouleau. Ce film plastifié 42 pourra par exemple être un film polyéthylène soudé sur la machine. L'article prélevé tombe dans le sachet 41 qui est ensuite fermé et sur lequel un système de pose d'étiquettes 43 aura placé les références de la commande et l'adresse du destinataire par exemple.

Le sachet est découpé et dirigé vers un bac de stockage qui se présente sous la forme d'un wagonnet 44. Dans l'exemple illustré aux figures 12 et 13, il est utilisé quatre wagonnets 44. La découpe du sachet permet de former le fond du sachet suivant et ainsi le préformage du sachet est automatiquement réalisé pour l'article suivant. Il est possible d'équiper éventuellement le chariot automoteur 6 de la présente invention d'un dispositif manipulateur 45 pour la distribution par exemple d'articles publicitaires ou de cadeaux. Dans ce cas, on dote le chariot 6 d'un distributeur 46 où sont disposés les cadeaux 47 à expédier dans chaque commande. Le bras manipulateur 45 vient automatiquement prélever un objet-cadeau 47 dans le distributeur et le place sur le convoyeur 39 afin que chaque article prélevé par l'ensemble 9 et 11 soit accompagné d'un cadeau introduit dans la goulotte 40 en même temps que l'article commandé.

On pourra avantageusement disposer à la sortie de l'ensacheuse 12 d'un mécanisme de tri 48 qui permettra de diriger les sachets vers l'un des wagonnets 44 selon des critères prédéterminés.

Ainsi, selon la nature des travaux exécutés, le chariot automoteur de la présente invention pourra être équipé des différents montages précédemment décrits.

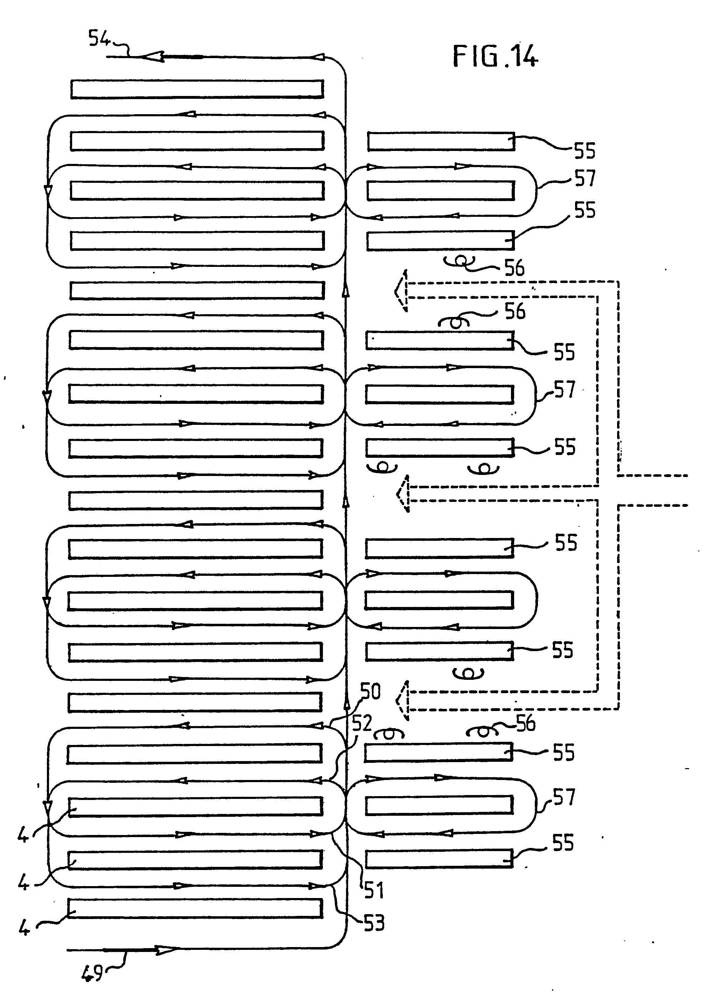

La figure 14 représente le plan d'un magasin avec manutention automatisée destiné à être équipé avec des chariots automoteurs de la présente invention. Il s'agit d'un exemple de fonctionnement non limitatif. Le magasin est constitué de casiers de stockage 4 remplis de bacs, trémies ou distributeurs. De préférence, on divise le magasin en plusieurs zones, dans l'exemple illustré en quatre zones, qui corresponde chacune à une nature d'articles différente, en particulier, dans les zones "amont" les articles encombrants et dans les zones ultérieures le petit vrac.

Le parcours des chariots automoteurs destinés à assurer le prélèvement des pièces pour réunir les éléments d'une commande se fait selon un mode de boucles imbriquées. Dans l'exemple de la figure 14, les chariots automoteurs provenant en 49, vides du magasin d'expédition se dirigent vers l'allée 50 pour y prélever les articles nécessaires, reviennent par l'allée 51 puis passent par l'allée 52 et enfin reviennent par l'allée 53 ayant ainsi parcouru toutes les allées de la zone 1. Les zones 2, 3 et 4 sont parcourues de façon analogue étant entendu que toutes les allées n'ont pas à être parcourues si aucun article n'est à prélever dans une rangée aller et retour.

A l'issue de la zone 4, les chariots automoteurs se dirigent en 54 vers le magasin d'emballage et d'expédition.

De préférence, les allées seront suffisamment larges pour que deux chariots puissent se dépasser. Cette faculté améliorera la vitesse de travail et par ailleurs ne provoquera aucun arrêt du système même en cas de panne d'un chariot.

Le réapprovisionnement des stocks sera réalisé à l'aide de casiers auxiliaires 55. Les casiers auxiliaires sont spéciaux en ce sens que les bacs contenus peuvent être extraits par chacune des faces. De la sorte, les opérateurs 56 placés derrière les casiers retireront les bacs vides du casier et les rempliront à l'aide d'articles amenés depuis le magasin d'approvisionnement général et replaceront les bacs remplis dans les casiers. Des chariots automoteurs de réapprovisionnement des stocks parcourent les casiers auxiliaires 55 selon des chemins 57 et amènent les bacs vides et reprennent les bacs remplis pour réapprovisionner les casiers 4. Le prélèvement de pièces est toujours possible par les chariots automoteurs de prélèvement dans les casiers 55 en parcourant les chemins 57, ce qui ne bloque pas le prélèvement dans les références en cours de réapprovisionnement.

Dans l'exemple choisi, il a été envisagé une action simultanée des chariots automoteurs de prélèvement des pièces du stock et de réapprovisionnement du stock. Toutefois, lorsque le niveau d'activité est faible il est possible d'utiliser un même chariot qui travaillera selon les moments en réapprovisionnant du stock ou en prélèvement des pièces pour réunir les éléments d'une commande.

**Revendications**

1. Chariot automoteur de manutention robotisé pour magasin de stockage d'articles, destiné à assurer le réapprovisionnement du stock et la prise d'articles pour réunir une commande, lesdits articles étant placés dans des bacs, trémies, distributeurs ou similaires, ledit chariot (6) comprenant:
- un châssis motorisé (7) monté sur roues susceptible de se déplacer dans les allées d'un magasin comprenant une multitude de casiers modulaires (4); des bacs (1), trémies (2) ou distributeurs (31 de magasin de stockage étant rangés dans lesdits casiers modulaires (4) dans lesquels sont regroupés par référence lesdits articles,

- un magasin embarqué (10),

- des moyens de prélèvement (9) portés par le châssis (7) susceptibles soit de déplacer un bac de magasin de stockage, ou similaire, entre les casiers du magasin de stockage et ledit chariot automoteur, et/ou inversement, soit de déplacer et de manipuler un des bacs, trémies ou distributeurs de magasin, embarqués sur ledit chariot automoteur,

caractérisé par le fait qu'il comporte:

- des moyens de préhension (11) susceptibles de prendre un des articles contenus dans un bac (1), trémie (2), distributeur (3) de magasin de stockage, manipulé par lesdits moyens de prélèvement (9),

- ledit magasin embarqué (10) présentant différents compartiments susceptibles de recevoir chacun un bac, trémie ou distributeur de magasin embarqué, lesquels seront aptes à recevoir lesdits articles manipulés par les moyens de préhension (11).

2. Chariot automoteur de manutention robotisé selon la revendication 1, caractérisé par le fait que les moyens de prélèvement (9) sont constitués d'un dispositif à fourches d'extraction (14) à déplacement vertical montées sur une tourelle (15) qui comprend un extracteur (16) mobile susceptible de faire glisser un bac (1), trémie (2) ou distributeur (3) depuis le casier de rangement (4) jusque sur lesdites fourches (14) et de repousser le bac (1), trémie (2) ou distributeur (3) depuis les fourches d'extraction (14) jusque dans le casier (4).

3. Chariot automoteur de manutention robotisé selon la revendication 2, caractérisé par le fait que l'extracteur (16) se présente sous la forme d'un chariot mobile (20) se déplaçant le long des fourches d'extraction (14) et présentant des moyens d'accrochage (21) amovibles avec le bac (1) à extraire des casiers (4).

4. Chariot automoteur de manutention robotisé selon la revendication 1, caractérisé par le fait que les moyens de prélèvement (9) portent les moyens de préhension qui sont constitués par un ensemble manipulateur (11) formé d'une tête de prélèvement (26) montée sur un chariot (27) mobile le long d'une potence (28) supportée par ladite tourelle (15) le long de laquelle elle coulisse.

5. Chariot automoteur de manutention robotisé selon la revendication 4, caractérisé par le fait que la tête de prélèvement (26) comprend un bras (30) mobile verticalement de support d'une étoile (35) dont les branches (34) sont équipées à leurs extrémités d'outils de préhension (31, 32, 33).

6. Chariot automoteur de manutention robotisé selon la revendication 5, caractérisé par le fait qu'un des outils (33) de préhension est formé de deux molettes motorisées côniques en appui par leur génératrice susceptibles de prélever des articles souples par pincement.

7. Chariot automoteur de manutention robotisé selon la revendication 1, caractérisé par le fait que le magasin embarqué (10) se présente sous la forme d'un meuble tournant formé de plusieurs piles de casiers superposés et répartis sur le pourtour du meuble.

8. Chariot automoteur de manutention robotisé selon la revendication 2, caractérisé par le fait que les fourches d'extraction (14) sont montées sur un plateau tournant (25) qui, par un pivotement horizontal, permet notamment d'aligner les fourches d'extraction (14) de part et d'autre du chariot (6) et également de les diriger vers le magasin embarqué (10).

9. Chariot automoteur de manutention robotisé selon la revendication 2, caractérisé par le fait que le magasin embarqué (10) comprend une ensacheuse (12) à la sortie de laquelle sont placés différents bacs de stockage formés par des wagonnets (44) précédés d'un mécanisme de tri (48) des articles à emballer.

10. Chariot automoteur de manutention robotisé selon la revendication 5, caractérisé par le fait que les outils de préhension (1 et 32) se présentent sous la forme de ventouses reliées à une turbine (37) par l'intermédiaire de l'étoile (35) dont les branches (34) sont creuses.


**Patentansprüche**

1. Robotisierter, selbstgetriebener Handhabungswagen für Warenlager, bestimmt zum Wiederauffüllen des Warenvorrats, und zur Entnahme von Warenartikeln, um eine Bestellung zusammenzustellen, wobei die besagten Warenartikel in Behältern, Trichtern, Warenausgebern und dergleichen untergebracht sind, aus

- einem motorisierten Chassis (7), das auf Rädern montiert ist, und in den Gängen eines Warenlagers verfahren werden kann, mit einer Vielzahl von modularen Regalen (4), wobei Behälter (1), Trichter (2), oder Warenausgeber (3) in den besagten modularen Regalen (4) Untergebracht sind, in denen die besagten Warenartikel entsprechend ihrer Bestellnummer zusammengefaßt sind;

- einem verladenen Lager (10);

- Entnahmemitteln (9), die von dem Chassis (7) getragen werden, und die entweder einen Lagerbehälter oder dergleichen von den Regalen des Warenlagers nach dem besagten Selbstgetriebenen Wagen und/oder umgekehrt befördern können, oder einen der Behälter, Trichter oder Warenausgeber, die auf den besagten selbstgetriebenen Wagen verladen sind, befördern und manipulieren können;

dadurch gekennzeichnet, daß er aufweist:

- Greifmittel (11), die einen der Warenartikel ergreifen können, die in einem von den besagten Entnahmemitteln (9) manipulierten Behälter (1), Trichter (2), oder Warenausgeber (3) des Warenlagers enthalten sind;

- wobei das besagte verladene Warenlager (10) verschiedene Fächer aufweist, von denen jedes einen Behälter, einen Trichter oder einen Warenausgeber des verladenen Warenlagers aufnehmen kann, in die die besagten, von den Greifmitteln (11) manipulierten Warenartikel eingefüllt werden können.

2. Robotisierter, selbstgetriebener Handhabungswagen gemäß Anspruch 1, dadurch gekennzeichnet, daß die Entnahmemittel (9) aus einer Vorrichtung mit vertikal verschiebbaren Ausziehgabeln (14) besteht, die auf einem Drehturm (15) montiert sind, der einen beweglichen Auszieher (16) aufweist, der einen Behälter (1), Trichter (2), oder Warenausgeber (3) von dem Aufbewahrungsregal (4) bis auf die besagten Gabeln (14) herausziehen kann, und den Behälter (1), Trichter (2) oder Warenausgeber (3) von den Ausziehgabeln (14) bis in das Regal (4) zurückschieben kann.

3. Robotisierter, selbstgetriebener Handhabungswagen gemäß Anspruch 2, dadurch gekennzeichnet, daß der Auszieher (16) die Form eines beweglichen Schlittens (20) hat, der längs der Ausziehgabeln (14) verschiebbar ist und einziehbare Mittel (21) zum Festhaken des aus den Regalen (4) herauszuziehenden Behälters (1) aufweist.

4. Robotisierter, selbstgetriebener Handhabungswagen gemäß Anspruch 1, dadurch gekennzeichnet, daß die Entnahmemittel (9) die Greifmittel tragen, die aus einer Manipulatoreinheit (11) bestehen, die von einem Entnahmekopf (26) gebildet wird, der auf einem Wagen (27) montiert ist, der längs eines Tragarms (28) verschiebbar ist, der von dem besagten Drehturm (15) getragen wird, längs dem dieser besagte Tragarm (28) verschiebbar ist.

5. Robotisierter, selbstgetriebener Handhabungswagen gemäß Anspruch 4, dadurch gekennzeichnet, daß der Entnahmekopf (26) einen vertikal beweglichen Arm (30) aufweist, an dem ein Stern (35) befestigt ist, dessen Arme (34) an ihren Enden mit Greifwerkzeugen (31, 32, 33) versehen sind.

6. Robotisierter, selbstgetriebener Handhabungswagen gemäß Anspruch 5, dadurch gekennzeichnet, daß eines der Greifwerkzeuge (33) von zwei konischen, motorisierten Rändelrädern gebildet wird, deren Mantellinien aneinandergrenzen, und mit denen weiche Warenartikel festgeklemmt und entnommen werden können.

7. Robotisierter, selbstgetriebener Handhabungswagen gemäß Anspruch 1, dadurch gekennzeichnet, daß das verladene Warenlager (10) die Form eines drehbaren Ständers aufweist, der von mehreren Stapeln aus übereinander angeordneten und über den Umfang des Ständers verteilten Regalen gebildet wird.

8. Robotisierter, selbstgetriebener Handhabungswagen gemäß Anspruch 2, dadurch gekennzeichnet, daß die Ausziehgabeln (14) auf einer Drehscheibe (25) montiert sind, die durch horizontale Schwenkung insbesondere ermöglicht, die Ausziehgabeln (14) auf beiden Seiten des Wagens (6) auszurichten, und sie außerdem nach dem verladenen Warenlager (10) hin zu drehen.

9. Robotisierter, selbstgetriebener Handhabungswagen gemäß Anspruch 2, dadurch gekennzeichnet, daß das verladene Lager (10) eine Sackeinfüllmaschine (12) aufweist, an deren Ausgang verschiedene Aufbewahrungsbehälter angeordnet sind, die von kleinen Waggons (44) gebildet werden, vor denen ein Mechanismus (48) zum Sortieren der zu verpackenden Warenartikel angeordnet ist.

10. Robotisierter, selbstgetriebener Handhabungswagen gemäß Anspruch 5, dadurch gekennzeichnet, daß die Greifwerkzeuge (1 und 32) die Form von Saugern aufweisen, die über den Stern (35), dessen Arme (34) hohl sind, mit einer Turbine (37) verbunden sind.

**Claims**

1. A self-propelled robotized handling truck for article warehouses, intended for ensuring the replenishment of stock and the taking of articles for meeting an order, the said articles being located in bins, hoppers, dispensers or the like, the said truck (6) comprising:
- a motor-driven frame (7) mounted on wheels and capable of moving in the alleys of a store comprising a multiplicity of modular racks (4); warehouse bins (1), hoppers (2) or dispensers (3) being arranged in rows in the said modular racks (4) in which the said articles are gathered under reference;
- a store (10) on board;
- removal means (9) carried by the frame (7) and capable either of moving a warehouse bin or the like between the racks in the warehouse and the said self-propelling truck and/or conversely moving and handling one of the store bins, hoppers or dispensers on board the said self-propelled truck;
characterized by the fact that it includes:
- gripper means (11) capable of taking one of the articles contained a warehouse bin (1), hopper (2), or dispenser (3) being handled by the said removal means (9);
- the said store (10) on board exhibiting various compartments each capable of receiving one store bin, hopper or dispenser brought on board, which will be suitable for receiving the said articles being handled by the gripper means (11).

2. A self-propelled robotized handling truck as in Claim 1, characterized by the fact that the removal means (9) consist of a device having vertically movable extractor forks (14) mounted on a turret (15) which includes a mobile extractor (16) capable of making a bin (1), hopper (2), or dispenser (3) slide from the master rack (4) up onto the said extractor forks (14) and of pushing the bin (1), hopper (2), or dispenser (3) back from the extractor forks (14) up into the rack (4).

3. A self-propelled robotized handling truck as in Claim 1, characterized by the fact that the extractor (16) appears in the form of a mobile carriage (20) which moves along the extracter forks (14) and exhibits removable means (21) for hooking onto the bin (1) which is to be withdrawn from the racks (4).

4. A self-propelled robotized handling truck as in Claim 1, characterized by the fact that the removal means (9) carry gripper means which consist of a manipulator unit (11) formed of a removal head (26) mounted on a carriage movable along a bracket (28) supported by the said turret (15) along which it slides.

5. A self-propelled robotized handling truck as in Claim 4, characterized by the fact that the removal head (26) comprises a vertically movable arm (30) for supporting a star (35) the limbs (34) of which are equipped at their ends with gripper tools (31, 32, 33).

6. A self-propelled robotized handling truck as in Claim 5, characterized by the fact that one of the gripper tools (33) is formed of two small conical motor-driven rollers bearing along their generatrices and capable of removing flexible articles by pinching.

7. A self-propelled robotized handling truck as in Claim 1, characterized by the fact that the store (10) on board appears in the form of a revolving device formed of a number of stacks of racks superimposed and distributed round the perimeter of the device.

8. A self-propelled robotized handling truck as in Claim 2, characterized by the fact that the extractor forks (14) are mounted on a revolving plate (25) which by horizontal pivoting enables, in particular, the extractor forks to be aligned on both sides of the truck (6) and likewise to be directed towards the store (10) on board.

9. A self-propelled robotized handling truck as in Claim 2, characterized by the fact that the store (10) on board includes a bagger (12) at the outlet from which differet storage bins are placed, formed by trolleys (44) preceded by a mechanism (48) for sorting the articles to be packed.

10. A self-propelled robotized handling truck as in Claim 5, characterized by the fact that the gripper tools (1 and 32) appear in the form of suckers connected to a turbine (37) by way of the star (35) the limbs (34) of which are hollow.

FIG.1

EP 0 169 156 B1

FIG.2    A + C

FIG.3    A + B + C

FIG.4    A + B + D

3

FIG.5

FIG.6

FIG .7a

FIG .7b

FIG .8 a

FIG .8 b

# FIG.9

# FIG.10

# FIG.11a

# FIG.11b

FIG.12

FIG.13

FIG.14